# EUROPÄISCHE PATENTSCHRIFT

(11) **EP 3 583 830 B1**
(45) Veröffentlichungstag und Bekanntmachung des Hinweises auf die Patenterteilung: **03.11.2021**
(21) Anmeldenummer: 19171093.8
(22) Anmeldetag: 25.04.2019
(51) Int. Cl.: A01B 23/02, A01D 34/66, A01D 34/73, A01C 7/20

(54) **BAUTEIL FÜR DIE MONTAGE AN EINER LANDMASCHINE, LANDMASCHINE SOWIE VERFAHREN ZUM BETREIBEN EINER SOLCHEN**
AGRICULTURAL MACHINE, COMPONENT FOR MOUNTING AT AN AGRICULTURAL MACHINE AND METHOD FOR OPERATING THE SAME
COMPOSANT DESTINÉ AU MONTAGE SUR UNE MACHINE AGRICOLE, MACHINE AGRICOLE AINSI QUE PROCÉDÉ DE FONCTIONNEMENT D'UNE TELLE MACHINE AGRICOLE

(30) Priorität: 18.06.2018 DE 102018114514
(43) Veröffentlichungstag der Anmeldung: 25.12.2019
(73) Patentinhaber: Frank Walz- und Schmiedetechnik GmbH, 35116 Hatzfeld/Eder (DE)
(72) Erfinder: Grote, Dr. Frank, 35037 Marburg (DE); Zimmermann, Stefan, 35037 Marburg (DE)
(74) Vertreter: Paul & Albrecht Patentanwälte PartG mbB

(56) Entgegenhaltungen:
- DE-T5-112014 002 038
- DE-U1-202015 009 200
- US-A1- 2017 138 019
- US-A1- 2018 092 293

## Beschreibung

Die Erfindung betrifft ein Bauteil für die Montage an einer Landmaschine, insbesondere Werkzeug oder Komponente einer Werkzeuganordnung zur Boden- und/oder Grünlandbearbeitung und/oder Ernte, wobei eine Sensorik vorgesehen ist, die eine oder mehrere zur Erfassung eines Verschleiß-, insbesondere Abnutzungszustandes des Bauteils ausgebildete Sensoreinrichtungen umfasst, wobei jede Sensoreinrichtung der Sensorik in einer in dem Bauteil ausgebildeten, bevorzugt länglichen Kavität angeordnet ist. Darüber hinaus betrifft die Erfindung eine Landmaschine sowie ein Verfahren zum Betreiben einer solchen.

Im landwirtschaftlichen sowie im Grünland- und Ernte-Bereich kommen Maschinen zum Einsatz, die insbesondere der Bearbeitung des Bodens, von Grünland- oder Ernte-Gütern dienen. Als Beispiele für Landmaschinen seien Pflüge, Grubber, Eggen, Fräsen, Mähdrescher, Mähmaschinen, Häcksler, Mulcher sowie Ernte-, Dünge- und Sämaschinen genannt.

Landmaschinen tragen in der Regel eine Mehrzahl von Bauteilen, die unmittelbar mit dem zu bearbeitenden Boden und/oder Grünland- und/oder Ernte-Gut in Kontakt kommen. Bei den Bauteilen handelt es sich insbesondere um Werkzeuge bzw. Komponenten von Werkzeuganordnungen, die beispielsweise durch Schare oder Scharspitzen, Grubber, Zinken, Heber, insbesondere Ährenheber, Scheiben oder Schneiden, insbesondere für ein Mähwerk oder einen Häcksler, oder Gleitkufen gegeben sein können.

Eine Bodenbearbeitungsschar mit einer Scharspitze geht beispielsweise aus der DE 10 2015 100 554 A1 hervor. Die DE 102 29 736 A1 und DE 195 21 067 A1 beispielsweise offenbaren Mähscheiben für Scheibenmähwerke.

Insbesondere diejenigen Bauteile, welche unmittelbar mit dem zu bearbeitenden Boden bzw. Ernte- oder Grünlandgut in Kontakt kommen, unterliegen einem Verschleiß in Form einer Materialabnutzung. Eine Scharspitze beispielsweise wird sich im Laufe der Zeit verkürzen, da an ihrem freien, dem zu bearbeitenden Boden zugewandten Ende infolge des Kontaktes mit dem Boden im Betrieb stetig Material abgetragen wird. Diese Bauteile stellen Verschleißbauteile einer Landmaschine dar.

Da mit abgenutzten Bauteilen eine schlechtere Bearbeitung einhergeht und sogar Sicherheitsrisiken verbunden sein können, müssen diese regelmäßig von einem Betreiber bzw. Nutzer der Landmaschine inspiziert werden. Hierfür muss die Maschine angehalten und die Bauteile müssen im Einzelnen in Augenschein genommen werden. Die Entscheidung, ob der Verschleiß- bzw. Abnutzungszustand eine weitere sichere Verwendung ermöglicht oder nicht, ist bei Überprüfung durch einen Nutzer oftmals subjektiv.

Da eine händische Inspektion der Bauteile mit vergleichsweise großem Aufwand verbunden ist und zu subjektiven Ergebnissen führen kann, sind die Bestrebungen dahin gegangen, den Verschleiß von Bauteilen von Landmaschinen automatisiert zu erfassen.

Die EP 3 213 617 A1 offenbart eine Landmaschine zum Einbringen von Dünger in den Boden, die mehrere Scharräder umfasst, mittels derer Schlitze in den Boden eingezogen werden, in die der Dünger eingebracht wird. Zur Erfassung einer Durchmesseränderung eines Scharrades aufgrund von Verschleiß ist ein induktiver Sensor vorgesehen, der nahe der Schneidkante des Scharrads angeordnet ist. An dieser Ausgestaltung wird teilweise als nachteilig erachtet, dass die verwendeten Sensoren in der für die Boden-, Ernte- und/oder Grünlandbearbeitung üblicherweise rauen Umgebung verschmutzt und beschädigt werden können, was zu verfälschten Ergebnissen und Ausfällen führen kann.

Die US 2017/138019 A1 offenbart ein System zur Überwachung vom Verschleiß eines Maschinenzahns einer Schwermaschine, beispielsweise einer Bergbaumaschine. Dieses weist eine Sensorik auf, die zumindest einen Verschleißsensor umfasst, der sich von einem Montageende des Maschinenzahns in Richtung von dessen Arbeitsspitze erstreckt.

Des Weiteren betrifft die DE 11 2014 002 038 T5 ein Abnutzungsüberwachungssystem zur Verwendung mit einer landwirtschaftlichen Maschine. Bei diesem Überwachungssystem ist ein Ultraschallsensor vorgesehen, der in einen austauschbaren Schneiderand eines Bodeneingriffswerkzeugs, das mit der Maschine verbunden werden kann, eingebettet ist.

Die US 2018/0092293 A1 beschreibt eine Sähmaschine mit einem Furchenöffner und einem dem Furchenöffner zugewandten Sensor, der dazu ausgestaltet ist, den Verschleiß des Furchenöffners zu messen.

Schließlich offenbart die DE 20 2015 009 200 U1 ein Werkzeug zum Befestigen an einem Werkzeughalter einer Werkzeugmaschine zum Bearbeiten von pflanzlichen und/oder mineralischen Materialien.

Ausgehend von dem Stand der Technik ist es daher eine Aufgabe der vorliegenden Erfindung, eine Möglichkeit für eine besonders zuverlässige und gleichzeitig komfortable Erfassung des Verschleißes von Bauteilen für Landmaschinen anzugeben.

Diese Aufgabe wird bei einem Bauteil der eingangs genannten Art dadurch gelöst, dass das Bauteil eine Verschleißschutzbeschichtung aufweist und sich wenigstens eine Sensoreinrichtung der Sensorik bis zu der Verschleißschutzbeschichtung oder bis zu einer Stelle, die maximal 2 cm, bevorzugt maximal 1 cm, besonders bevorzugt maximal 0,5 cm von der Verschleißschutzbeschichtung beabstandet ist, erstreckt.

Der Grundgedanke der vorliegenden Erfindung besteht mit anderen Worten darin, bei einem Bauteil einer Landmaschine, das besonders bevorzugt als Werkzeug oder Komponente einer Werkzeuganordnung zur Boden- und/oder Grünlandbearbeitung und/oder Ernte ausgebildet ist, einen oder mehrere Sensor(en) zur Erfassung des Verschleiß- bzw. Abnutzungszustandes direkt in dem Bauteil anzuordnen, also in das Bauteil zu integrieren. Hierfür sind erfindungsgemäß eine oder mehrere Kavitäten in dem Bauteil ausgebildet, in der oder denen sich (jeweils) wenigstens eine Sensoreinrichtung erstreckt. Durch die Anordnung der Sensoreinrichtung(en) innerhalb des Bauteiles kann einerseits eine besonders zuverlässige Messung des tatsächlichen Bauteilzustandes erfolgen, da die Messung direkter Natur ist, konkret am Ort des Verschleißes erfolgt. Darüber hinaus ist eine Sensoreinrichtung, die in einer in dem Bauteil ausgebildeten Kavität angeordnet ist, über das umgebende Bauteilmaterial geschützt, so dass Ausfälle oder Fehlmessungen vermieden und zu allen Zeiten zuverlässige Ergebnisse erhalten werden können, dies auch in der im landwirtschaftlichen Bereich üblicherweise rauen Umgebung. Die in das Bauteil integrierte wenigstens eine Sensoreinrichtung macht das Bauteil zu einem "intelligenten" Bauteil, insbesondere, da der Bauteilverschleiß während des Betriebes überwacht und etwa ein Austausch des Bauteils automatisiert veranlasst werden kann.

In dem erfindungsgemäßen Bauteil kann nur eine Kavität vorgesehen sein, in welcher eine Sensoreinrichtung oder mehrere Sensoreinrichtung(en) der Sensorik angeordnet ist bzw. sind. Es ist aber auch möglich, dass in einem erfindungsgemäßen Bauteil zwei oder mehr Kavitäten ausgebildet sind, in denen jeweils eine oder mehrere Sensoreinrichtung(en) angeordnet ist bzw. sind.

Entsprechend umfasst gemäß einer Ausführungsform des erfindungsgemäßen Bauteiles die Sensorik mehrere Sensoreinrichtungen und sind alle Sensoreinrichtungen der Sensorik in einer in dem Bauteil ausgebildeten Kavität angeordnet oder sind die Sensoreinrichtungen der Sensorik in verschiedenen in dem Bauteil ausgebildeten Kavitäten angeordnet.

Sind in einer in dem Bauteil ausgebildeten insbesondere einseitig offenen Kavität zwei oder mehr Sensoreinrichtungen der Sensorik angeordnet, erstrecken sich Sensoreinrichtungen bevorzugt verschieden tief in die Kavität.

Umfasst die Sensorik des erfindungsgemäßen Bauteils mehr als eine Sensoreinrichtung, ist weiterhin bevorzugt vorgesehen, dass die Sensoreinrichtungen derart angeordnet sind, dass mit jeder Sensoreinrichtung ein anderer Grad des Verschleißes bzw. der Abnutzung des Bauteils erfassbar ist.

Eine weitere bevorzugte Ausführungsform zeichnet sich dadurch aus, dass sich die Sensoreinrichtungen der Sensorik bis in verschiedene Tiefen in das Bauteil und/oder in verschiedene Bereiche des Bauteils erstrecken. Dies hat sich als besonders geeignet erwiesen, um den Verschleiß über einen weiten Bereich des Bauteils zuverlässig erfassen zu können. Es kann eine noch genauere, insbesondere auch ortsaufgelöste Bestimmung des Verschleißes erfolgen.

Die Sensoreinrichtungen der Sensorik können sich weiterhin von einem gemeinsamen, insbesondere auf der Bauteiloberfläche liegenden Ursprungspunkt ausgehend astartig verzweigen.

Bei einer besonders bevorzugten Ausgestaltung der Erfindung ist die wenigstens eine Sensoreinrichtung derart ausgebildet, dass sie infolge eines lokalen Materialabtrags von dieser und/oder einer Beschädigung dieser ein Signal ausgibt oder die Ausgabe eines Signals beendet. Dieser besonders bevorzugten Ausführungsform liegt die Idee zugrunde, dass ein Verschleiß, insbesondere eine Abnutzung eines Bauteils dadurch detektierbar gemacht werden kann, dass wenigstens eine in dem Bauteil angeordnete Sensoreinrichtung zusammen mit dem Bauteilmaterial verschleißt bzw. abgenutzt wird. Dazu kann dann zumindest eine Sensoreinrichtung derart ausgebildet sein, dass sie auf eine lokale Materialentfernung mit einem Signal reagiert bzw. damit, dass eine Signalausgabe nicht weiter erfolgt. Alternativ oder zusätzlich dazu kann die Sensoreinrichtung derart ausgebildet sein, dass sie ein Signal ausgibt oder die Ausgabe eines Signals beendet, wenn eine Beschädigung dieser eintritt. Eine Beschädigung kann beispielsweise in Form einer Rissbildung in der Sensoreinrichtung bzw. einer Komponente dieser vorliegen, oder dadurch, dass ein Bruch in der Sensoreinrichtung bzw. einer Komponente dieser auftritt und/oder ein Teil der Sensoreinrichtung bzw. einer Komponente dieser abreißt bzw. abgetrennt wird. Hierdurch wird es insbesondere möglich, beispielsweise auch zu detektieren, dass sich in dem erfindungsgemäßen Bauteil ein Riss bzw. Bruch gebildet hat bzw. ein Teil von diesem entfernt wurde. Die in das Bauteil integrierte wenigstens eine Sensoreinrichtung wird dann insbesondere zusammen mit dem Bauteil reißen, brechen bzw. zumindest teilweise mit abgetrennt, was diese Beschädigung detektierbar macht.

Weiterhin bevorzugt kann vorgesehen sein, dass wenigstens eine Sensoreinrichtung der Sensorik durch einen Leiter, insbesondere einer Leiterschleife, gebildet wird oder einen solche umfasst, wobei der Leiter bevorzugt U-förmig mit zwei länglichen Schenkeln und einem die beiden länglichen Schenkel verbindenden gebogenen Abschnitt ausgebildet ist, und der gebogene Abschnitt bevorzugt in einem Endbereich einer in dem Bauteil ausgebildeten Kavität angeordnet ist. Besonders bevorzugt ist eine Kavität, in welcher ein Leiter, insbesondere eine Leiterschleife angeordnet ist, einseitig offen ausgebildet und der gebogene Abschnitt des Leiters, insbesondere der Leiterschleife, ist an dem dem offenen Ende gegenüberliegenden geschlossenen Ende der Kavität angeordnet. Wird der gebogene Endbereich des Leiters bzw. der Leiterschleife durch einen Verschleiß, insbesondere eine Materialabnutzung des Bauteils, der sich bis zu der Stelle erstreckt, an dem der gebogene Endbereich in dem Bauteil angeordnet ist, entfernt, wird ein Stromfluss durch den Leiter automatisch beendet, wodurch ein Verschleiß detektierbar ist.

Umfasst die Sensorik mehrere Sensoreinrichtungen, die einen Leiter, insbesondere eine Leiterschleife, umfassen bzw. durch einen solche gegeben sind, sind die Leiter bevorzugt parallel geschaltet, damit identifizierbar ist, welche Sensoreinrichtung von einer Abnutzungsbedingten Stromunterbrechung betroffen ist und somit, wo der Verschleiß vorliegt.

Insbesondere für den Fall, dass wenigstens eine Sensoreinrichtung der Sensorik einen Leiter, insbesondere eine Leiterschleife umfasst oder durch einen solche gegeben ist, wird die Sensoreinrichtung zweckmäßiger Weise derart in dem Bauteil angeordnet, dass sie sich zumindest abschnittsweise, insbesondere mit einem Endbereich, bis in einen Bereich des Bauteils erstreckt, in dem ein Verschleiß, insbesondere ein Materialabtrag (besonders) zu erwarten ist.

In weiterer Ausgestaltung ist entsprechend vorgesehen, dass das Bauteil einen Kontaktbereich aufweist, der dazu bestimmt ist, im Betrieb einer mit dem Bauteil ausgestatteten Landmaschine mit dem Boden und/oder Ernte- und/oder Mähgut in Kontakt zu kommen, und sich insbesondere wenigstens eine Sensoreinrichtung der Sensorik bis in den Kontaktbereich des Bauteils erstreckt.

Auch kann vorgesehen sein, dass das Bauteil eine vordere Kontaktkante oder Kontaktseite aufweist, die dazu bestimmt ist, im Betrieb einer mit dem Bauteil ausgestatteten Landmaschine zuerst mit dem Boden und/oder Ernte- und/oder Mähgut in Kontakt zu kommen, und sich insbesondere wenigstens eine Sensoreinrichtung der Sensorik bis zu der vorderen Kontaktkante oder Kontaktseite oder bis zu einer Stelle, die maximal 5 cm, bevorzugt maximal 3 cm von der vorderen Kontaktkante oder Kontaktseite beabstandet ist, erstreckt.

Das erfindungsgemäße Bauteil weist weiterhin, um einen Verschleiß zu minimieren, eine Verschleißschutzbeschichtung auf. Dabei erstreckt sich wenigstens eine Sensoreinrichtung der Sensorik bis zu der Verschleißschutzbeschichtung oder bis zu einer Stelle, die maximal 2 cm, bevorzugt maximal 1 cm, besonders bevorzugt maximal 0,5 cm von der Verschleißschutzbeschichtung beabstandet ist. Dann wird insbesondere auch die automatisierte Überwachung des Zustands einer Verschleißschutzbeschichtung möglich. Existiert eine Fügestellt zwischen der Verschleißschutzbeschichtung und dem verbleibenden Werkezugabschnitt, kann vorgesehen sein, dass sich wenigstens eine Sensoreinrichtung der Sensorik bis zu der Fügestellte erstreckt. Ist keine Fügestelle vorhanden, kann vorgesehen sein, dass sich wenigstens eine Sensoreinrichtung bis zu einem Übergang vom Grundwerkstoff zur Verschleißschutzbeschichtung erstreckt. Dies ist besonders vorteilhaft, da dann auf die erfindungsgemäße Weise ein Verschleiß detektiert werden kann, bevor der Grundwerkstoff angegriffen wird und es ist insbesondere eine Reparatur und anschließende Wiederverwendung des erfindungsgemäßen Bauteils möglich.

Eine Verschleißbeschichtung kann beispielsweise als karbidhaltige und/oder hartstoffhaltigen und/oder keramische Beschichtung gegeben sein. Eine Verschleißbeschichtung kann insbesondere mittels Laserstrahlung, PTA und/oder durch thermisches (kaltes) Spritzen aufgebracht sein. Auch ist es möglich, dass eine Verschleißbeschichtung in Form einer oder mehreren Hartmetallplatten vorliegt, die insbesondere stoff- und/oder formschlüssig mit dem Grundwerkstoff verbunden sind.

Eine weitere bevorzugte Ausführungsform zeichnet sich dadurch aus, dass wenigstens eine in dem Bauteil ausgebildete Kavität, in der wenigstens eine Sensoreinrichtung der Sensorik angeordnet ist, einseitig offen ausgebildet ist. Dies hat sich als besonders geeignet erwiesen, da auf einfache Weise eine oder mehrere Sensoreinrichtung(en) im Anschluss an die Herstellung des Werkezugs mit Kavität(en) in eine einseitig offene Kavität eingesetzt werden kann bzw. können. Es ist ferner möglich, dass sich Anschlüsse der Sensoreinrichtung, insbesondere Anschlüsse zur Stromversorgung, durch das offene Ende der Kavität nach außen erstrecken.

Entsprechen ist gemäß einer weiteren Ausführungsform vorgesehen, dass wenigstens eine Sensoreinrichtung der Sensorik, insbesondere zur Verbindung mit einer mit dem Bauteil auszustattenden Landmaschine, wenigstens einen Anschluss umfasst, der aus einem offenen Ende der Kavität, in welcher die Sensoreinrichtung der Sensorik angeordnet ist, herausragt.

Eine oder mehrere einseitig offene Kavität(en) sind besonders bevorzugt durch einen sich von einer Stelle an der Bauteiloberfläche in das Bauteilinnere erstreckenden und im Bauteilinneren endenden, bevorzugt länglichen Kanal gegeben. Auch ist es möglich, dass eine oder mehrere einseitig offene Kavität(en) durch ein Sackloch gegeben ist bzw. sind.

In Weiterbildung weist ferner wenigstens eine Kavität, in der wenigstens eine Sensoreinrichtung der Sensorik angeordnet ist, einen zumindest im Wesentlichen runden Querschnitt auf, ist bevorzugt zumindest im Wesentlichen zylinderförmig.

Alternativ oder zusätzlich weist wenigstens eine Kavität, in der wenigstens eine Sensoreinrichtung der Sensorik angeordnet ist, eine Länge auf, welche den Durchmesser der Kavität um ein Vielfachfaches, insbesondere zumindest um das Fünffache, bevorzugt zumindest um das Zehnfache überschreitet. Dies hat sich als besonders geeignet erwiesen.

Weiterhin kann vorgesehen sein, dass wenigstens eine Kavität, in der wenigstens eine Sensoreinrichtung der Sensorik angeordnet ist, unter Durchführung eines materialabtragenden Verfahrens, insbesondere durch Bohren mit einem Bohrwerkzeug und/oder Laserstrahl, und/oder durch ein chemisches Verfahren, insbesondere Ätzen, in das Bauteil eingebracht ist. Diese Verfahren haben sich als besonders geeignet für eine nachträgliche Einbringung wenigstens einer Kavität erwiesen.

Auch kann vorgesehen sein, dass das Bauteil mit der wenigstens einen Kavität durch Urformverfahren, insbesondere Gießen, hergestellt ist. Dann ist besonders bevorzugt wenigstens eine Sensoreinrichtung der Sensorik in das Bauteil eingegossen.

Alternativ zum Gießen kann das Bauteil mit der wenigstens einen Kavität auch durch ein generatives Verfahren, insbesondere 3-D-Drucken hergestellt sein.

Alternativ kann das Bauteil mit der wenigstens einen Kavität auch durch ein Umformverfahren, insbesondere Schmieden, hergestellt sein.

Eine weitere vorteilhafte Ausführungsform des erfindungsgemäßen Bauteils zeichnet sich dadurch aus, dass an dem Bauteil wenigstens ein Sendemodul zum kabellosen Senden von Signalen vorgesehen ist, das mit wenigstens einer Sensoreinrichtung der Sensorik verbunden ist. Dies macht eine kabellose Übertragung von Signalen einer oder mehrerer Sensoreinrichtung(en) der Sensorik beispielsweise an eine Empfangseinheit, die an einer mit einem oder mehreren erfindungsgemäßen Bauteilen ausgestatten Landmaschine vorgesehen ist, möglich.

An dem Bauteil kann ferner wenigstens ein elektrisches Anschlusselement, insbesondere wenigstens ein Stecker und/oder wenigstens eine Buchse vorgesehen sein. Hierüber ist dann insbesondere eine Verbindung mit einer Einrichtung einer mit dem Bauteil ausgestatteten Landmaschine möglich.

Neben der Sensorik zur Erfassung eines Verschleiß-, insbesondere Abnutzungszustandes des Bauteils kann einer oder können mehrere weitere Sensoren zur Erfassung anderer Parameter an bzw. in dem Bauteil vorgesehen sein. Beispielsweise kann wenigstens ein Sensor zur Erfassung der Umgebungstemperatur und/oder wenigstens ein Sensor zur Erfassung der Luft- und/oder Bodenfeuchte und/oder wenigstens ein Sensor zur Erfassung des Luftdrucks und/oder wenigstens ein Sensor zur Erfassung der Lage des Bauteils im Raum vorgesehen sein, der oder die bevorzugt in einer oder in mehreren in dem Bauteil ausgebildeten Kavitäten angeordnet sind. Die Sensoren können in der oder den Kavitäten angeordnet sein, in denen sich auch die Sensoreinrichtung(en) der Sensorik zur Verschleißerfassung befindet bzw. befinden. Alternativ oder zusätzlich können weitere Kavitäten extra für die Sensoren zur Erfassung anderer Parameter in dem Bauteil vorgesehen sein.

Das erfindungsgemäße Bauteil kann beispielsweise als Schar oder Scharspitze oder Grubber oder Zinken oder Fräsmeißel oder Heber, insbesondere Ährenheber, oder Scheibe, insbesondere zur Bodenbearbeitung oder Aussaat, oder Schneide, insbesondere für ein Mähwerk oder einen Häcksler, oder Gleitkufe oder Gleitblech, insbesondere Streichblech für ein Pflug oder Leitblech für einen Grubber ausgebildet sein.

Ein weiterer Gegenstand der Erfindung ist eine Landmaschine, insbesondere Bodenbearbeitungs- und/oder Grünlandmaschine, bevorzugt Pflug oder Grubber oder Egge oder Fräser oder Mähdrescher oder Mähmaschine oder Häcksler oder Mulcher oder Ernte- oder Dünge- oder Sämaschine, umfassend wenigstens ein erfindungsgemäßes Bauteil.

In Weiterbildung weist die erfindungsgemäße Landmaschine wenigstens einen Bauteilträger auf, an dem wenigstens ein erfindungsgemäßes Bauteil fixiert ist, und weist der Bauteilträger bevorzugt wenigstens einen elektrischen Anschluss auf, der zu einem an dem wenigstens einen Bauteil vorgesehenen elektrischen Anschluss korrespondierend ausgebildet und mit diesem verbindbar oder verbunden ist.

Eine weitere Ausführungsform der erfindungsgemäßen Landmaschine zeichnet sich dadurch aus, dass diese eine Steuereinrichtung aufweist, die mit wenigstens einer Sensoreinrichtung der Sensorik kabellos oder kabelgebunden verbunden und zum Empfangen von Signalen der wenigstens einen Sensoreinrichtung ausgebildet ist, wobei die Steuereinrichtung bevorzugt ausgebildet und eingerichtet ist, um in Reaktion auf den Empfang eines Signals von einer Sensoreinrichtung der Sensorik wenigstens eine Mitteilung an einen Benutzer der Landmaschine auszugeben. Die Mitteilung kann beispielsweise sein, dass ein Bauteil der Landmaschine zu reparieren oder auszutauschen ist.

Schließlich ist ein Gegenstand der Erfindung ein Verfahren zum Betreiben einer erfindungsgemäßen Landmaschine, bei dem vor und/oder während und/oder nach einer Boden- und/oder Grünlandbearbeitung mit der Landmaschine überwacht wird, ob wenigstens eine Sensoreinrichtung der Sensorik wenigstens eines erfindungsgemäßen Bauteils ein Signal ausgibt oder die Ausgabe eines Signals beendet und in Reaktion darauf bevorzugt wenigstens ein Bauteil der Landmaschine ausgewechselt wird.

Hinsichtlich der Ausgestaltungen der Erfindung wird auch auf die Unteransprüche sowie auf die nachfolgende Beschreibung mehrerer Ausführungsbeispiele unter Bezugnahme auf die beiliegende Zeichnung verwiesen.

In der Zeichnung zeigt:
Figur 1 ein erstes Ausführungsbeispiel eines Bauteils in Form einer Scharspitze in rein schematischer, perspektivischer Darstellung,
Figur 2 einen Längsschnitt durch die Scharspitze aus Figur 1,
Figur 3 ein zweites Ausführungsbeispiel eines erfindungsgemäßen Bauteils in Form einer Scharspitze in rein schematischer, perspektivischer Darstellung,
Figur 4 ein drittes Ausführungsbeispiel eines Bauteils in Form einer Mähscheibe in rein schematischer, perspektivischer Darstellung,
Figur 5 ein viertes Ausführungsbeispiel eines Bauteils in Form einer Gleitkufe in rein schematischer, perspektivischer Darstellung,
Figur 6 ein fünftes Ausführungsbeispiel eines Bauteils in Form einer Rodeschar in rein schematischer, perspektivischer Darstellung, und
Figur 7 eine von einem Traktor gezogene Landmaschine, die mit einer Mehrzahl von den in Figur 1 dargestellten Scharspitzen ausgestattet ist.

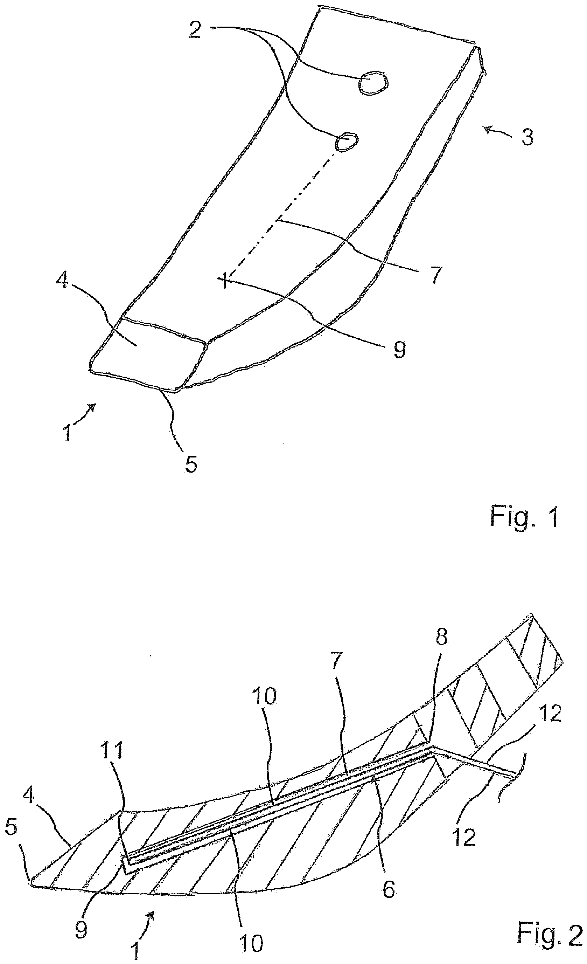

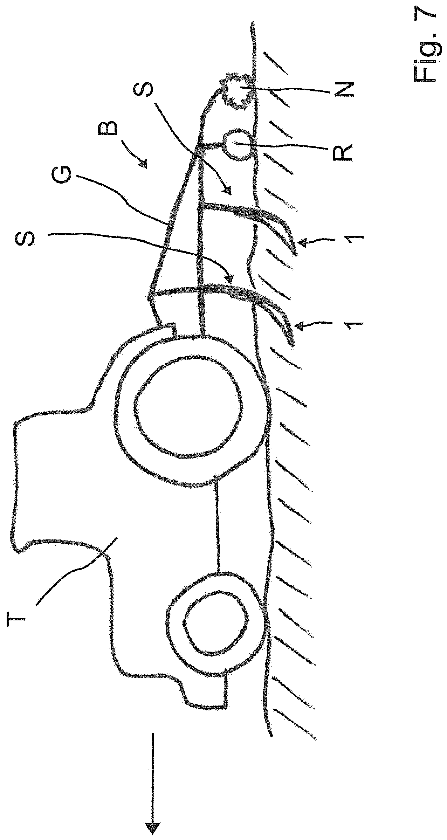

In der Figur 1 ist ein erstes Ausführungsbeispiel eines Bauteils dargestellt, welches als Scharspitze 1 ausgebildet ist, die insbesondere an einem Zinken bzw. Stiel S einer nur inder Figur 7 dargestellten landwirtschaftlichen Bodenbearbeitungsmaschine B, die von einer Zugmaschine, bei dem dargestellten Ausführungsbeispiel einem Traktor T, gezogen wird, befestigt werden kann. Die Zugrichtung ist in Figur 7 mit einem Pfeil angedeutet. Die Bodenbearbeitungsmaschine B umfasst einen Grundrahmen G, an welchem die die Scharspitzen 1 tragenden Stiele S befestigt sind, eine Stützrad R und ein Nachlaufgerät N. Es sei angemerkt, dass es natürlich auch möglich ist, dass eine erfindungsgemäße Land-, etwa Bodenbearbeitungsmaschine B, alternativ zu dem dargestellten Ausführungsbeispiel einen eigenen Antrieb aufweisen kann.

Für die Fixierung sind in der Scharspitze 1 in an sich bekannter Weise exemplarisch zwei Durchgangslöcher 2 vorgesehen, durch welche sich im bestimmungsgemäß montierten Zustand zwei nicht dargestellte Schrauben erstrecken, die in korrespondierende, an den Zinken bzw. Stiel S vorgesehene, in der rein schematischen Figur 7 nicht erkennbare Gewindebohrungen eingeschraubt sind. Die beiden Durchgangslöcher 2 sind in einem hinteren Bereich der Scharspitze 1 vorgesehen, der im Folgenden als Befestigungsbereich 3 bezeichnet wird.

Die Scharspitze weist an dem von dem Befestigungsbereich 3 abgewandten Ende eine Vorderseite 4 und Kontaktkante 5 auf, die dazu bestimmt ist, im bestimmungsgemäß montierten Zustand und Betrieb einer mit der Scharspitze 1 bestückten Bodenbearbeitungsmaschine B zuerst mit dem Boden in Kontakt zu kommen.

Die Scharspitze 1 weist eine Sensorik auf, die eine zur Erfassung eines Verschleiß-, insbesondere Abnutzungszustandes der Scharspitze 1 ausgebildete Sensoreinrichtung 6 umfasst, die in einer in der Scharspitze 1 ausgebildeten, länglichen Kavität 7 angeordnet ist. Die Sensoreinrichtung 6 und Kavität 7 können der Figur 2 entnommen werden, die einen zentralen Längsschnitt durch die Scharspitze 1 zeigt.

Bei dem dargestellten Ausführungsbeispiel ist die Kavität 7 durch einen zylinderförmigen Kanal 7 gegeben, dessen Länge seinen Durchmesser - wie in der Figur 2 erkennbar - um ein Vielfaches, konkret um mehr als das Zehnfaches überschreitet. Der Kanal 7 erstreckt sich von einer der beiden Durchgangsbohrungen 2 ausgehend in Richtung der Vorderseite 4 der Scharspitze 1 und endet im Inneren der Scharspitze 1 nahe der Vorderseite 4. Der Kanal 7 ist einseitig offen ausgebildet, wobei das offenen Ende 8 im Bereich der Durchgangsbohrung 2 liegt und das andere, geschlossene Ende 9 nahe der Vorderseite 4 der Scharspitze 1. Es sei angemerkt, dass in der Figur 1 der innenliegende Kanal 7 nur durch eine gestrichelte Linie und die Position von dem geschlossenem Ende 9 des Kanals 7 durch ein Kreuz angedeutet ist.

Die Sensoreinrichtung 6 ist derart ausgebildet ist, dass sie infolge eines lokalen Materialabtrags ein Signal ausgibt oder die Ausgabe eines Signals beendet. Konkret ist die Sensoreinrichtung durch einen Leiter, konkret eine Leiterschleife 6 gegeben, die U-förmig mit zwei länglichen Schenkeln 10 und einem die beiden länglichen Schenkel 10 verbindenden, stirnseitigen gebogenen Abschnitt 11 ausgebildet ist. Der gebogene Abschnitt 11 ist in einem Endbereich des Kanals 7, bei dem dargestellten Ausführungsbeispiel konkret unmittelbar an dem geschlossenen Ende 9 des Kanals 7 angeordnet.

Die Leiterschleife 6 erstreckt sich bis zu einer Stelle in der Scharspitze 1, die etwa 1,5 cm von der Kontaktkante 5 entfernt ist. Der gebogene Abschnitt 11 liegt also in einer entsprechenden Entfernung zur Kontaktkante 5.

Die Scharspitze 1 mit dem Kanal 7 wurde durch Gießen oder Schmieden hergestellt und die Leiterschleife 6 wurde im Anschluss an die Herstellung in den Kanal 7 eingebracht. Alternativ dazu kann ein Kanal 7 beispielsweise auch nach dem Gießen oder Schmieden durch mechanische Bearbeitung, etwa Bohren in die Scharspitze 1 eingebracht werden, wobei der Kanal 7 dann leicht anders in der Scharspitze 1 anzuordnen wäre, insbesondere das offenen Ende 8 weiter unten in der Bohrung 2 oder auch unterhalb dieser liegen müsste.

Die Leiterschleife 6 weist Anschlussabschnitte 12 auf, die sich durch das offene Ende 8 aus dem Kanal 7 erstrecken. Über die Anschlussabschnitte 12 ist die Leiterschleife 6 mit einer Stromquelle der nicht dargestellten Bodenbearbeitungsmaschine verbunden, wenn sie an dieser montiert ist.

Im Betrieb wird die Leiterschleife 6 über die Stromquelle der Bodenbearbeitungsmaschine gespeist und insbesondere kontinuierlich von Strom durchflossen. Infolge der Bearbeitung von Boden verschließt die Scharspitze 1, wobei der Materialabtrag insbesondere an der Kontaktkante 5 beginnt und sich in Richtung des Befestigungsbereiches 3 mit den Durchgangslöchern 2 fortschreitet. Erreicht der Verschleiß das geschlossene Ende 9 des Kanals 7 und den dort angeordneten gebogenen Abschnitt 11 der Leiterschleife 6, wird der gebogene Abschnitt 1 zusammen mit dem diesen umgebenden Material abgetragen und der Stromfluss durch die Leiterschleife 6 wird infolge des lokalen Materialabtrags von dieser unterbrochen.

Mittels einer in den Figuren nicht gezeigten zentralen Steuereinrichtung der Bodenbearbeitungsmaschine, mit der die Leiterschleife 6 verbunden ist, wird überwacht, ob ein Stromfluss durch die Leiterschleife 6 erfolgt oder nicht und die Unterbrechung des Stromflusses wird entsprechend registriert. In Reaktion darauf wird ein Signal ausgelöst und ein Nutzer bzw. Betreiber der Bodenbearbeitungsmaschine wird informiert, dass eine Reparatur bzw. ein Austausch der Scharspitze 1 erforderlich ist.

Bei dem dargestellten Ausführungsbeispiel ist nur eine Sensoreinrichtung in Form einer Leiterschleife 6 in dem Kanal 7 angeordnet. Es versteht sich, dass alternativ dazu auch zwei oder mehr Sensoreinrichtungen insbesondere in Form von Leiterschleifen 6 in dem Kanal 7 und/oder ggf. in dem Bauteil 1 vorgesehenen weiteren Kanälen angeordnet sein können. Sind mehrere Sensoreinrichtungen 6 vorgesehen, erstrecken sich diese bevorzugt in unterschiedliche Tiefen und/oder Bereiche des Bauteils 1. Beispielsweise kann in dem Kanal 7 der Scharspitze 1 aus den Figuren 1 und 2 wenigstens eine weitere Sensoreinrichtung insbesondere in Form einer Leiterschleife 6 angeordnet sein, die sich nicht bis zu dem geschlossenen Ende 9 des Kanals 7 erstreckt, sondern beispielsweise nur bis zur Mitte oder einer anderen Stelle zwischen dem offenen 8 und geschlossen Ende 9 des Kanals 7. Mit der wenigstens einen weiteren Sensoreinrichtung 6 kann dann ein weiter fortgeschrittener Verschleiß der Scharspitze 1 detektiert werden, welcher gemeldet wird, wenn auch von der weiteren Sensoreinrichtung, insbesondere Leiterschleife 6 lokal Material abgetragen wurde, was zu einer Unterbrechung des Stromflusses führt.

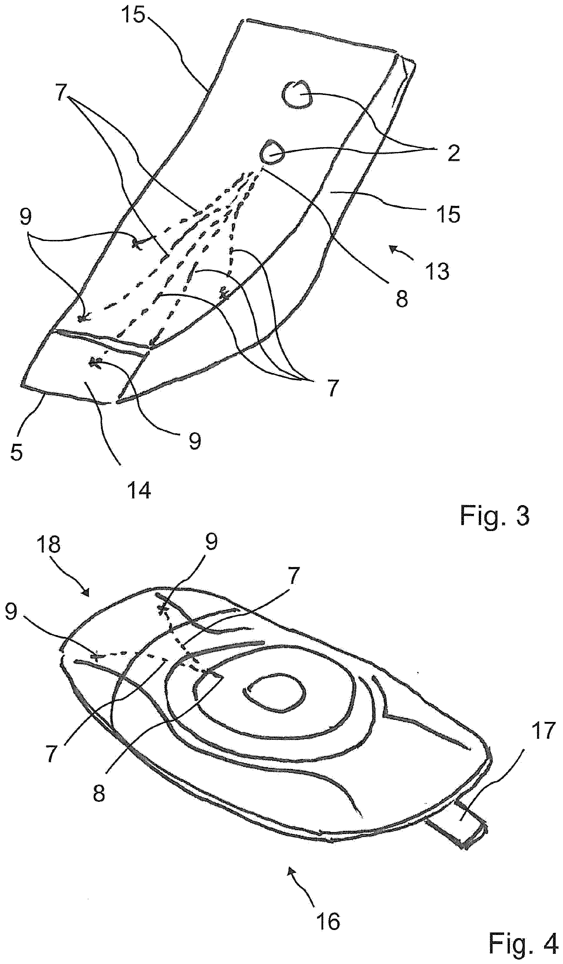

Die Figur 3 zeigt ein zweites Ausführungsbeispiel eines erfindungsgemäßen Werkzeugs, welches ebenfalls als Scharspitze 13 ausgebildet ist. Diese stimmt, was die Außenkontur angeht, mit derjenigen aus den Figuren 1 und 2 überein. Gleiche Komponenten sind mit gleichen Bezugszeichen versehen.

Die einzigen Unterschiede zwischen der Scharspitze 1 aus den Figuren 1 und 2 und der Scharspitze 13 aus der Figur 3 besteht darin, dass Letztere mehrere Kanäle 7 und darin angeordnete Sensoreinrichtungen in Form von jeweils einer Leiterschleife 6 umfasst und an der Vorderseite 4 der Scharspitze 13 eine Verschleißschutzbeschichtung 14 vorgesehen ist. In der Figur 3 sind die Kanäle 7 und deren geschlossenen Enden 9 - in Analogie zu Figur 1 - jeweils durch gestrichelte Linien bzw. Kreuze angedeutet. Die Kanäle 7 der zweiten Ausführungsform sind weiterhin in Abweichung zu dem Kanal 7 der Ersten nicht geradlinig.

In der Scharspitze 13 nach dem zweiten Ausführungsbeispiel sind insgesamt fünf einseitig offene Kanäle 7 vorgesehen, die sich von einem gemeinsamen, im Bereich einer der Durchgangsbohrungen 2 liegenden Ursprungspunkt ausgehend astartig verzweigen. Die Kanäle 7 haben, wie in der Figur erkennbar, verschiedene Längen und erstrecken sich unterschiedlich tief in die Scharspitze 1 sowie in unterschiedliche Bereiche dieser. Konkret erstreckt sich der mittlere und längste Kanal 7, der etwa mittig durch die Scharspitze 1 verläuft, von der Durchgangsbohrung 2 bis zu der Rückseite der Verschleißschutzbeschichtung 14. Die beiden zu dem mittleren Kanal 7 benachbarten Kanäle 7 sind etwas kürzer und erstrecken sich jeweils bis zu einer Stelle, die nahe der Verschleißschutzbeschichtung 14 liegt, jedoch nicht mittig in der Scharspitze 1 sondern nahe der beiden Seitenflächen 15 dieser. Die beiden äußeren Kanäle 7 erstrecken sich ebenfalls bis zu Stellen in der Scharspitze 1, die jeweils nahe einer Seitenfläche 15 liegen, sind jedoch nochmals kürzer, so dass deren geschlossene Enden 9 noch näher an dem Ursprungspunkt bei der Durchgangsbohrung 2 liegen.

In jedem der fünf Kanäle 7 der zweiten Ausführungsform ist jeweils eine Leiterschleife 6 angeordnet, die sich jeweils bis zu dem geschlossenen Ende 9 erstreckt. Die Leiterschleifen 6 sind in der rein schematischen Figur 3 nicht gezeigt. Die gebogenen Abschnitte 11 der Leiterschleifen 6 liegen jeweils unmittelbar an dem geschlossenen Ende 9 des jeweiligen Kanals 7.

Durch die Mehrzahl der Sensoreinrichtungen in Form von Leiterschleifen 6, die sich in unterschiedliche Tiefe und unterschiedliche Bereiche der Scharspitze 13 erstrecken, kann eine besonders genaue, insbesondere ortsaufgelöste Bestimmung des Verschleißes der Scharspitze 13 verfolgen.

Im Betrieb werden alle Leiterschleifen 6 über die Stromquelle einer mit der Scharspitze 13 bestückte Bodenbearbeitungsmaschine gespeist und insbesondere kontinuierlich von Strom durchflossen. Es wird überwacht, ob eine Stromunterbrechung bei einer oder mehreren Leiterschleifen 6 eintritt, was einen Verschleiß an der jeweiligen Stelle anzeigt.

Ein drittes Ausführungsbeispiel für ein Bauteil ist in der Figur 4 gezeigt. Dieses ist durch eine Komponente einer Werkzeuganordnung für einen in den Figuren nicht dargestellten Scheibenmäher, konkret eine Mähscheibe 16 für einen solchen gegeben. Die Mähscheibe 16 trägt in hinlänglich bekannter Weise an gegenüberliegenden Seiten jeweils eine Klinge 17, von denen in der rein schematischen Figur 4 nur eine Klinge 17 gezeigt ist. Die Werkzeuganordnung umfasst neben der Mähscheibe 16 und den Klingen 17 in ebenfalls hinlänglich bekannter Weise weitere Komponenten, etwa einen Mähscheiben- und Klingenträger, auf die nicht näher eingegangen wird. Eine Werkzeuganordnung mit einer Mähscheibe kann beispielsweise der DE 195 21 067 A1 entnommen werden.

In der Mähscheibe 16 sind zwei einseitig offene Kanäle 7 mit darin angeordneten Sensoreinrichtungen in Form von jeweils einer Leiterschleife 6 vorgesehen. Die beiden Kanäle 6 verzweigen sich - in Analogie zu dem zweiten Ausführungsbeispiel aus Figur 3 - von einem gemeinsamen auf der Mähscheibenoberfläche, konkret der in Figur 4 nach unten weisenden Seite dieser liegenden Ursprungspunkt ausgehend astartig. Die Leiterschleifen 6 erstrecken sich in dem jeweiligen Kanal 7 wiederum bis zu dem geschlossenen Ende 9, welches in der Figur 4 erneut durch Kreuze angedeutet ist, während die Kanäle 7 wiederum durch gestrichelte Linien angedeutet sind. Die geschlossenen Enden 9 und gebogenen Abschnitte 11 der nicht dargestellten Leiterschleifen 6 liegen in einem Kontaktbereich 18 der Mähscheibe 16, der im Betrieb des Scheibenmähers mit Mähgut in Kontakt kommt und Verschleiß unterliegt.

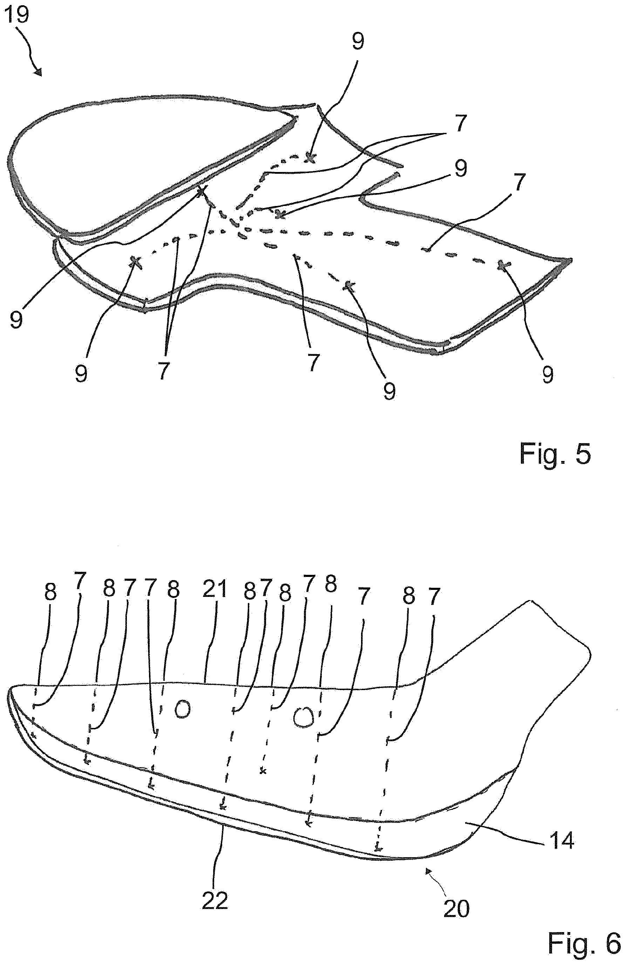

Die Figur 5 zeigt ein weiteres Ausführungsbeispiel eines Bauteils, welches ebenfalls durch eine Komponente einer Werkzeuganordnung für einen in den Figuren nicht dargestellten Scheibenmäher gegeben ist. Konkret ist dieses als Gleitkufe 19 für einen Scheibenmäher ausgebildet, die im Betrieb mit dem Boden in Kontakt kommt und dadurch verschleißt. In dieser sind insgesamt sechs Kanäle 7 ausgebildet, in denen jeweils eine Sensoreinrichtung in Form einer Leiterschleife 6 angeordnet ist. Die Kanäle 7 sind auch bei dem vierten Ausführungsbeispiel einseitig offen ausgebildet und verzweigen sich von einem gemeinsamen, auf der Bauteiloberfläche, konkret an der in Figur 5 nach oben weisenden Seite liegenden Ursprungspunkt ausgehend astartig. Sie haben verschiedene Längen und ihre geschlossenen Enden 9 liegen in unterschiedlichen Bereichen der Gleitkufe 19 wodurch Verschleiß an verschiedenen Stellen detektierbar ist.

Schließlich zeigt die Figur 6 ein fünftes Ausführungsbeispiel eines Bauteils, welches als Rodeschar 20 ausgebildet ist. In dieser sind insgesamt sieben Kanäle 7 mit jeweils einer darin angeordneten Sensoreinrichtung in Form einer Leiterschleife 6 vorgesehen. Die Kanäle 7 verzweigen sich in Abweichung von dem zweiten bis vierten Ausführungsbeispiel nicht astartig von einem gemeinsamen Ursprungspunkt, sondern sind erkennbar zumindest im Wesentlichen parallel zueinander angeordnet und über die Ausdehnung der Rodeschar 20 in deren Längsrichtung verteilt. Sie erstrecken sich alle von der Oberseite 21 der Rodeschar 20 ausgehend in Richtung der gegenüberliegenden Kontaktkante 22, die im Betrieb zuerst mit dem zu bearbeitenden Boden in Kontakt kommt.

Die Kanäle 7 sind erneut alle einseitig offen ausgebildet, wobei deren offenes Ende 8 jeweils an der Oberseite 21 der Rodeschar 20 liegt und deren geschlossenes Ende 9 innerhalb der Rodeschar 20, jeweils in einem bestimmten Abstand zu der Kontaktkante 22. Die Rodeschar 20 weist, wie die Scharspitze 13 aus Figur 3, eine Verschleißschutzbeschichtung 14 auf. Es sei angemerkt, dass die in Figur 4 dargestellte Mähscheibe 16 beispielsweise in völliger Analogie dazu ebenfalls mit einer Verschleißschutzbeschichtung 14 versehen sein kann.

Auch bei dem fünften Ausführungsbeispiel ist in jedem der sieben Kanäle 7 eine U-förmige Leiterschleife 6 angeordnet, deren gebogener Abschnitt 11 an dem geschlossenen Ende 9 des Kanals 7 liegt, welches in der Figur 6 jeweils durch Kreuze angedeutet ist.

Für das dritte bis fünfte Ausführungsbeispiel gilt in völliger Analogie zu dem zweiten Ausführungsbeispiel, dass im Betrieb alle Leiterschleifen 6 über eine Stromquelle einer mit dem jeweiligen Bauteil 16, 19, 20 bestückte Landmaschine gespeist und insbesondere kontinuierlich von Strom durchflossen werden. Es wird überwacht, ob eine Stromunterbrechung bei einer oder mehreren Leiterschleifen 6 eintritt, was einen Verschleiß an der jeweiligen Stelle anzeigt.

Für das zweite bis fünfte Ausführungsbeispiel der Bauteile 13, 16, 19, 20 gilt ferner in völliger Analogie zu dem ersten, dass eine Landmaschine, wie sie beispielhaft in Form einer Bodenbearbeitungsmaschine B in der Figur 7 gezeigt ist, mit einem bzw. mehreren der Bauteile 13, 16, 19, 20 bestückt sein kann.

Es sei angemerkt, dass die Bauteile 1, 13, 16, 19, 20 zur Verbindung mit einer Stromquelle und insbesondere Steuereinrichtung einer Landmaschine, an welcher diese montiert sind, in den Figuren nicht dargestellte Anschlüsse, beispielsweise in Form von Buchsen oder Steckern oder anders ausgebildete Kontaktstellen aufweisen können. An den Landmaschinen sind dann bevorzugt korrespondierende Anschlüsse vorgesehen und bevorzugt derart ausgebildet und angeordnet, dass sich im bestimmungsgemäß montierten Zustand der Bauteile 1, 13, 16, 19, 20 ein Kontakt einstellt. Alternativ oder zusätzlich kann eine kabellose Signalübertragung vorgesehen sein, wofür dann geeignete Sender und Empfänger an den Bauteilen 1, 13, 16, 19, 20 und Landmaschinen vorgesehen sind. Eine Stromversorgung kann dann beispielsweise auch über in den erfindungsgemäßen Bauteilen 1, 13, 16, 19, 20 angeordnete Batterien erfolgen.

Durch die Anordnung der Sensoreinrichtung(en) 6 innerhalb des jeweiligen Bauteils 1, 13, 16, 19, 20 kann einerseits eine besonders zuverlässige Messung des tatsächlichen Bauteilzustandes erfolgen, da die Messung direkter Natur ist, konkret am Ort des Verschleißes erfolgt. Darüber hinaus ist eine Sensoreinrichtung 6, die in einer in dem Bauteil 1, 13, 16, 19, 20 ausgebildeten Kavität 7 angeordnet ist, über das umgebende Bauteilmaterial geschützt, so dass Ausfälle oder Fehlmessungen vermieden und zu allen Zeiten zuverlässige Ergebnisse erhalten werden können, dies auch in der im landwirtschaftlichen Bereich üblicherweise rauen Umgebung. Die in das Bauteil 1, 13, 16, 19, 20 integrierte(n) Sensoreinrichtung(en) 6 macht bzw. machen das Bauteil 1, 13, 16, 19, 20 zu einem "intelligenten" Bauteil, insbesondere, da der Bauteilverschleiß während des Betriebes überwacht und etwa ein Austausch des Bauteils 1, 13, 16, 19, 20 automatisiert veranlasst werden kann.

### Bezugszeichenliste

- 1: Scharspitze
- 2: Durchgangslöcher
- 3: Befestigungsbereich
- 4: Vorderseite
- 5: Kontaktkante
- 6: Leiterschleife
- 7: Kanal
- 8: offenes Ende
- 9: geschlossenes Ende
- 10: Schenkel
- 11: Abschnitt
- 12: Anschlussabschnitt
- 13: Scharspitze
- 14: Verschleißschutzbeschichtung
- 15: Seitenfläche
- 16: Mähscheibe
- 17: Klinge
- 18: Kontaktbereich
- 19: Gleitkufe
- 20: Rodeschar
- 21: Oberseite
- 22: Kontaktkante
- B: Bodenbearbeitungsmaschine
- S: Stiel
- T: Traktor
- G: Grundrahmen
- R: Stützrad
- N: Nachlaufgerät

## Patentansprüche

1. Bauteil (1, 13, 16, 19, 20) für die Montage an einer Landmaschine, insbesondere Werkzeug oder Komponente einer Werkzeuganordnung zur Boden- und/oder Grünlandbearbeitung und/oder Ernte, wobei eine Sensorik vorgesehen ist, die eine oder mehrere zur Erfassung eines Verschleiß-, insbesondere Abnutzungszustandes des Bauteils (1, 13, 16, 19, 20) ausgebildete Sensoreinrichtungen (6) umfasst, wobei jede Sensoreinrichtung (6) der Sensorik in einer in dem Bauteil (1, 13, 16, 19, 20) ausgebildeten, bevorzugt länglichen Kavität (7) angeordnet ist, **dadurch gekennzeichnet, dass** das Bauteil (1, 13, 16, 19, 20) eine Verschleißschutzbeschichtung (14) aufweist und sich wenigstens eine Sensoreinrichtung (6) der Sensorik bis zu der Verschleißschutzbeschichtung (14) oder bis zu einer Stelle, die maximal 2 cm, bevorzugt maximal 1 cm, besonders bevorzugt maximal 0,5 cm von der Verschleißschutzbeschichtung (14) beabstandet ist, erstreckt.

2. Bauteil (1, 13, 16, 19, 20) nach Anspruch 1, **dadurch gekennzeichnet, dass** die Sensorik mehrere Sensoreinrichtungen (6) umfasst und alle Sensoreinrichtungen (6) der Sensorik in einer in dem Bauteil (1, 13, 16, 19, 20) ausgebildeten Kavität (7) angeordnet sind oder die Sensoreinrichtungen (6) der Sensorik in verschiedenen in dem Bauteil (1, 13, 16, 19, 20) ausgebildeten Kavitäten (7) angeordnet sind, wobei die Sensoreinrichtungen (6) der Sensorik bevorzugt derart angeordnet sind, dass mit jeder Sensoreinrichtung (6) ein anderer Grad des Verschleißes bzw. der Abnutzung des Bauteils (1, 13, 16, 19, 20) erfassbar ist.

3. Bauteil (1, 13, 16, 19, 20) nach Anspruch 2, **dadurch gekennzeichnet, dass** sich die Sensoreinrichtungen (6) der Sensorik bis in verschiedene Tiefen in das Bauteil (1, 13, 16, 19, 20) und/oder in verschiedene Bereiche des Bauteils (1, 13, 16, 19, 20) erstrecken, und/oder sich die Sensoreinrichtungen (6) der Sensorik von einem gemeinsamen, insbesondere auf der Bauteiloberfläche liegenden Ursprungspunkt ausgehend astartig verzweigen.

4. Bauteil (1, 13, 16, 19, 20) nach einem der vorhergehenden Ansprüche, **dadurch gekennzeichnet, dass** wenigstens eine Sensoreinrichtung (6) der Sensorik derart ausgebildet ist, dass sie infolge eines lokalen Materialabtrags von dieser und/oder einer Beschädigung dieser ein Signal ausgibt oder die Ausgabe eines Signals beendet, und/oder dass wenigstens eine Sensoreinrichtung der Sensorik durch einen Leiter, insbesondere eine Leiterschleife (6), gebildet wird oder einen solchen umfasst, wobei der Leiter (6) insbesondere U-förmig mit zwei länglichen Schenkeln (10) und einem die beiden länglichen Schenkel (10) verbindenden gebogenen Abschnitt (11) ausgebildet ist, und der gebogene Abschnitt (11) bevorzugt in einem Endbereich einer in dem Bauteil (1, 13, 16, 19, 20) ausgebildeten Kavität (7) angeordnet ist.

5. Bauteil (1, 13, 16, 19, 20) nach einem der vorhergehenden Ansprüche, **dadurch gekennzeichnet, dass** das Bauteil (1, 13, 16, 19, 20) einen Kontaktbereich (18) aufweist, der dazu bestimmt ist, im Betrieb einer mit dem Bauteil (1, 13, 16, 19, 20) ausgestatteten Landmaschine mit dem Boden und/oder Ernte- und/oder Mähgut in Kontakt zu kommen, und sich insbesondere wenigstens eine Sensoreinrichtung (6) der Sensorik bis in den Kontaktbereich (18) des Bauteils (1, 13, 16, 19, 20) erstreckt, und/oder dass das Bauteil (1, 13, 16, 19, 20) eine vordere Kontaktkante (5) oder Kontaktseite aufweist, die dazu bestimmt ist, im Betrieb einer mit dem Bauteil (1, 13, 16, 19, 20) ausgestatteten Landmaschine zuerst mit dem Boden und/oder Ernte- und/oder Mähgut in Kontakt zu kommen, und sich insbesondere wenigstens eine Sensoreinrichtung (6) der Sensorik bis zu der vorderen Kontaktkante (5) oder Kontaktseite oder bis zu einer Stelle, die maximal 5 cm, bevorzugt maximal 3 cm von der vorderen Kontaktkante (5) oder Kontaktseite beabstandet ist, erstreckt.

6. Bauteil (1, 13, 16, 19, 20) nach einem der vorhergehenden Ansprüche, **dadurch gekennzeichnet, dass** wenigstens eine in dem Bauteil (1, 13, 16, 19, 20) ausgebildete Kavität (7), in der wenigstens eine Sensoreinrichtung (6) der Sensorik angeordnet ist, einseitig offen ausgebildet ist, insbesondere durch einen sich von einer Stelle an der Bauteiloberfläche in das Bauteilinnere erstreckenden und im Bauteilinneren endenden, bevorzugt länglichen Kanal (7) oder durch ein Sackloch gegeben ist.

7. Bauteil (1, 13, 16, 19, 20) nach Anspruch 6, **dadurch gekennzeichnet, dass** wenigstens eine Sensoreinrichtung (6) der Sensorik, insbesondere zur Verbindung mit einer mit dem Bauteil (1, 13, 16, 19, 20) auszustattenden Landmaschine, wenigstens einen Anschluss (12) umfasst, der aus einem offenen Ende (8) der Kavität (7), in welcher die Sensoreinrichtung (6) der Sensorik angeordnet ist, herausragt.

8. Bauteil (1, 13, 16, 19, 20) nach einem der vorhergehenden Ansprüche, **dadurch gekennzeichnet, dass** wenigstens eine Kavität (7), in der wenigstens eine Sensoreinrichtung (6) der Sensorik angeordnet ist, einen zumindest im Wesentlichen runden Querschnitt aufweist, bevorzugt zumindest im Wesentlichen zylinderförmig ist, und/oder dass wenigstens eine Kavität (7), in der wenigstens eine Sensoreinrichtung (6) der Sensorik angeordnet ist, eine Länge aufweist, welche den Durchmesser der Kavität (7) um ein Vielfachfaches, insbesondere zumindest um das Fünffache, bevorzugt zumindest um das Zehnfache überschreitet, und/oder dass wenigstens eine Kavität (7), in der wenigstens eine Sensoreinrichtung (6) der Sensorik angeordnet ist, unter Durchführung eines materialabtragenden Verfahrens, insbesondere durch Bohren mit einem Bohrwerkzeug und/oder Laserstrahl, und/oder durch ein chemisches Verfahren, insbesondere Ätzen, in das Bauteil (1, 13, 16, 19, 20) eingebracht ist.

9. Bauteil (1, 13, 16, 19, 20) nach einem der vorhergehenden Ansprüche, **dadurch gekennzeichnet, dass** das Bauteil (1, 13, 16, 19, 20) mit der wenigstens einen Kavität (7) durch ein Urformverfahren, insbesondere Gießen hergestellt ist, wobei bevorzugt wenigstens eine Sensoreinrichtung (6) der Sensorik in das Bauteil (1, 13, 16, 19, 20) eingegossen ist, oder dass das Bauteil (1, 13, 16, 19, 20) mit der wenigstens einen Kavität (7) durch ein generatives Verfahren, insbesondere 3-D-Drucken hergestellt ist, oder dass das Bauteil (1, 13, 16, 19, 20) mit der wenigstens einen Kavität (7) durch ein Umformverfahren, insbesondere Schmieden hergestellt ist.

10. Bauteil (1, 13, 16, 19, 20) nach einem der vorhergehenden Ansprüche, **dadurch gekennzeichnet, dass** an dem Bauteil (1, 13, 16, 19, 20) wenigstens ein Sendemodul zum kabellosen Senden von Signalen vorgesehen ist, das mit wenigstens einer Sensoreinrichtung (6) der Sensorik verbunden ist, und/oder dass an dem Bauteil (1, 13, 16, 19, 20) wenigstens ein elektrisches Anschlusselement, insbesondere wenigstens ein Stecker und/oder wenigstens eine Buchse vorgesehen ist.

11. Bauteil (1, 13, 16, 19, 20) nach einem der vorhergehenden Ansprüche, **dadurch gekennzeichnet, dass** das Bauteil (1, 13, 16, 19, 20) als Schar oder Scharspitze oder Grubber oder Zinken oder Fräsmeißel oder Heber, insbesondere Ährenheber, oder Scheibe, insbesondere zur Bodenbearbeitung oder Aussaat, oder Schneide, insbesondere für ein Mähwerk oder einen Häcksler, oder Gleitkufe oder Gleitblech, insbesondere Streichblech für ein Pflug oder Leitblech für einen Grubber, ausgebildet ist.

12. Landmaschine, insbesondere Bodenbearbeitungs- und/oder Grünlandmaschine, bevorzugt Pflug oder Grubber oder Egge oder Fräser oder Mähdrescher oder Mähmaschine oder Häcksler oder Mulcher oder Ernte- oder Dünge- oder Sämaschine, umfassend wenigstens ein Bauteil (1, 13, 16, 19, 20) nach einem der vorhergehenden Ansprüche.

13. Landmaschine nach Anspruch 12, **dadurch gekennzeichnet, dass** die Landmaschine wenigstens einen Bauteilträger aufweist, an dem wenigstens ein Bauteil (1, 13, 16, 19, 20) nach einem der Ansprüche 1 bis 17 fixiert ist, und der Bauteilträger bevorzugt wenigstens einen elektrischen Anschluss aufweist, der zu einem an dem wenigstens einen Bauteil (1, 13, 16, 19, 20) vorgesehenen elektrischen Anschluss korrespondierend ausgebildet und mit diesem verbindbar oder verbunden ist.

14. Landmaschine nach Anspruch 12 oder 14, **dadurch gekennzeichnet, dass** die Landmaschine eine Steuereinrichtung aufweist, die mit wenigstens einer Sensoreinrichtung (6) der Sensorik kabellos oder kabelgebunden verbunden und zum Empfangen von Signalen der wenigstens einen Sensoreinrichtung (6) ausgebildet ist, wobei die Steuereinrichtung bevorzugt ausgebildet und eingerichtet ist, um in Reaktion auf den Empfang eines Signals von einer Sensoreinrichtung (6) der Sensorik wenigstens eine Mitteilung an einen Benutzer der Landmaschine auszugeben.

15. Verfahren zum Betreiben einer Landmaschine nach einem der Ansprüche 13 bis 15, bei dem vor und/oder während und/oder nach einer Boden- und/oder Grünlandbearbeitung mit der Landmaschine überwacht wird, ob wenigstens eine Sensoreinrichtung (6) der Sensorik wenigstens eines Bauteils (1, 13, 16, 19, 20) nach einem der Ansprüche 1 bis 12 ein Signal ausgibt oder die Ausgabe eines Signals beendet und in Reaktion darauf bevorzugt wenigstens ein Bauteil (1, 13, 16, 19, 20) der Landmaschine repariert oder ausgewechselt wird.

## Claims

1. Component (1, 13, 16, 19, 20) for mounting on an agricultural machine, in particular a tool or component of a tool arrangement for soil and/or grassland cultivation and/or harvesting, wherein a sensor system is provided which comprises one or more sensor devices (6) designed to detect a state of wear, in particular a state of abrasion, of the component (1, 13, 16, 19, 20), wherein each sensor device (6) of the sensor system is arranged in a preferably elongate cavity (7) formed in the component (1, 13, 16, 19, 20), **characterized in that** the component (1, 13, 16, 19, 20) has an anti-wear coating (14) and at least one sensor device (6) of the sensor system extends up to the anti-wear coating (14) or up to a point which is at the distance of at most 2 cm, preferably at most 1 cm, particularly preferably at most 0.5 cm, from the anti-wear coating (14).

2. Component (1, 13, 16, 19, 20) according to claim 1, **characterized in that** the sensor system comprises a plurality of sensor devices (6) and all sensor devices (6) of the sensor system are arranged in one cavity (7) formed in the component (1, 13, 16, 19, 20) or the sensor devices (6) of the sensor system are arranged in different cavities (7) formed in the component (1, 13, 16, 19, 20), wherein the sensor devices (6) of the sensor system are preferably arranged in such a way that with each sensor device (6) a different degree of wear of the component (1, 13, 16, 19, 20) can be detected.

3. Component (1, 13, 16, 19, 20) according to claim 2, **characterized in that** the sensor devices (6) of the sensor system extend to different depths into the component (1, 13, 16, 19, 20) and/or into different regions of the component (1, 13, 16, 19, 20), and/or the sensor devices (6) of the sensor system branch out in a branch-like manner starting from a common point of origin lying in particular on the component (1, 13, 16, 19, 20) surface.

4. Component (1, 13, 16, 19, 20) according to any of the preceding claims, **characterized in that** at least one sensor device (6) of the sensor system is designed in such a way that it outputs a signal or terminates the output of a signal as a result of local removal of material therefrom and/or damage thereto, and/or **in that** at least one sensor device of the sensor system is formed by a conductor, in particular a conductor loop (6), or comprises such a conductor, the conductor (6) in particular being designed in a U-shape with two elongate legs (10) and a bent section (11) connecting the two elongate legs (10) and the bent section (11) preferably being arranged in a region of a cavity (7) formed in the component (1, 13, 16, 19, 20).

5. Component (1, 13, 16, 19, 20) according to any of the preceding claims, **characterized in that** the component (1, 13, 16, 19, 20) comprises a contact region (18) intended to come into contact with the ground and/or harvested and/or mown material during operation of an agricultural machine equipped with the component (1, 13, 16, 19, 20), and in particular at least one sensor device (6) of the sensor system extends into the contact region (18) of the component (1, 13, 16, 19, 20), and/or **in that** the component (1, 13, 16, 19, 20) has a front contact edge (5) or a contact side which is intended to come into contact with the ground and/or harvested and/or mown material during operation of an agricultural machine equipped with the component, and in particular at least one sensor device (6) of the sensor system extends as far as the front contact edge (5) or contact side or as far as a point which is at a distance of at most 5 cm, preferably at most 3 cm from the front contact edge (5) or contact side.

6. Component (1, 13, 16, 19, 20) according to any of the preceding claims, **characterized in that** at least one cavity (7) formed in the component (1, 13, 16, 19, 20), in which cavity (7) at least one sensor device (6) of the sensor system is arranged, is open on one side, in particular is formed by a preferably elongated channel (7) extending from a point on the component surface into the interior of the component (1, 13, 16, 19, 20) and ending in the interior of the component (1, 13, 16, 19, 20), or is formed by a blind hole.

7. Component (1, 13, 16, 19, 20) according to claim 6, **characterized in that** at least one sensor device (6) of the sensor system, in particular for connection to an agricultural machine to be equipped with the component (1, 13, 16, 19, 20), comprises at least one connection (12) which projects out of an open end (8) of the cavity (7) in which the sensor device (6) of the sensor system is arranged.

8. Component (1, 13, 16, 19, 20) according to any of the preceding claims, **characterized in that** at least one cavity (7), in which at least one sensor device (6) of the sensor system is arranged, has an at least substantially round cross-section, preferably is at least substantially cylindrical, and/or **in that** at least one cavity (7), in which at least one sensor device (6) of the sensor system is arranged, has a length which exceeds the diameter of the cavity (7) by a multiple, in particular at least by a factor of five, preferably at least by a factor of ten, and/or **in that** at least one cavity (7), in which at least one sensor device (6) of the sensor system is arranged, is introduced into the component by carrying out a material-removing process, in particular by drilling with a drilling tool and/or a laser beam, and/or by a chemical process, in particular etching.

9. Component (1, 13, 16, 19, 20) according to any of the preceding claims, **characterized in that** the component (1, 13, 16, 19, 20) with the at least one cavity (7) is produced by a primary molding process, in particular casting, preferably at least one sensor device (6) of the sensor system being cast into the component (1, 13, 16, 19, 20), or **in that** the component (1, 13, 16, 19, 20) with the at least one cavity (7) is produced by a generative process, in particular 3D printing, or **in that** the component (1, 13, 16, 19, 20) with the at least one cavity is produced by a forming process, in particular forging.

10. Component (1, 13, 16, 19, 20) according to any of the preceding claims, **characterized in that** at least one transmitter module for wireless transmission of signals is provided on the component (1, 13, 16, 19, 20), which transmitter module is connected to at least one sensor device (6) of the sensor system, and/or **in that** at least one electrical connection element, in particular at least one plug and/or at least one socket, is provided on the component (1, 13, 16, 19, 20).

11. Component (1, 13, 16, 19, 20) according to any of the preceding claims, **characterized in that** the component (1, 13, 16, 19, 20) is designed as a share or share point or cultivator or tine or milling chisel or lifter, in particular ear lifter, or disc, in particular for soil cultivation or sowing, or cutting edge, in particular for a mower or a chopper, or skid or sliding plate, in particular mould-board for a plough or guide plate for a cultivator.

12. Agricultural machine, in particular soil cultivating and/or grassland machine, preferably plough or cultivator or harrow or tiller or combine or mower or chopper or mulcher or harvesting or fertilizing or sowing machine, comprising at least one component (1, 13, 16, 19, 20) according to any of the preceding claims.

13. Agricultural machine according to claim 12, **characterized in that** the agricultural machine comprises at least one component carrier to which at least one component (1, 13, 16, 19, 20) according to any of claims 1 to 11 is fixed, and the component carrier preferably comprises at least one electrical connection which is designed to correspond to an electrical connection provided on the at least one component (1, 13, 16, 19, 20) and is connectable or connected thereto.

14. Agricultural machine according to claim 12 or 13, **characterized in that** the agricultural machine has a control device, which is connected to at least one sensor device (6) of the sensor system in a cable-free or cable-connected manner and is designed to receive signals from the at least one sensor device (6), wherein the control device is preferably designed and set up to output at least one message to a user of the agricultural machine as response to the reception of a signal from a sensor device (6) of the sensor system.

15. Method for operating an agricultural machine according to any of claims 12 to 14, wherein, before and/or during and/or after a soil and/or a grassland cultivation with the agricultural machine, it is monitored whether at least one sensor device (6) of the sensor system of at least one component (1, 13, 16, 19, 20) according to any of claims 1 to 12 outputs a signal or terminates the output of a signal and, in response thereto, preferably at least one component (1, 13, 16, 19, 20) of the agricultural machine is repaired or replaced.

## Revendications

1. Composant (1, 13, 16, 19, 20) destiné à être monté sur une machine agricole, en particulier un outil ou un composant d'un arrangèrent d'outils pour le travail du sol et/ou des prairies et/ou la récolte, un système de capteurs étant prévue qui comprend un ou plusieurs dispositifs de capteur (6) conçus pour détecter un état d'usure, en particulier un état d'abrasion, du composant (1, 13, 16, 19, 20), chaque dispositif de capteur (6) du système de capteurs étant disposé dans une cavité (7) de préférence allongée formée dans le composant (1, 13, 16, 19, 20), **caractérisé en ce que** le composant (1, 13, 16, 19, 20) présente un revêtement anti-usure (14) et au moins un dispositif de capteur (6) du système de capteurs s'étend jusqu'au revêtement anti-usure (14) ou jusqu'à un point qui se trouve à une distance maximale de 2 cm, de préférence de 1 cm, particulièrement préférée de 0,5 cm, du revêtement anti-usure (14).

2. Composant (1, 13, 16, 19, 20) selon la revendication 1, **caractérisé en ce que** le système de capteurs comprend une pluralité de dispositifs de capteur (6) et tous les dispositifs de capteur (6) du système de capteurs sont disposés dans une cavité (7) formée dans le composant (1, 13, 16, 19, 20) ou les dispositifs de capteur (6) du système de capteurs sont disposés dans différentes cavités (7) formées dans le composant (1, 13, 16, 19, 20), les dispositifs de capteur (6) du système de capteurs étant de préférence disposés de telle sorte que chaque dispositif de capteur (6) détecte un degré d'usure différent du composant (1, 13, 16, 19, 20).

3. Composant (1, 13, 16, 19, 20) selon la revendication 2, **caractérisé en ce que** les dispositifs de capteur (6) du système de capteurs s'étendent à différentes profondeurs dans le composant (1, 13, 16, 19, 20) et/ou dans différentes zones du composant (1, 13, 16, 19, 20), et/ou les dispositifs de capteur (6) du système de capteurs se ramifient à partir d'un point d'origine commun situé en particulier sur la surface du composant.

4. Composant (1, 13, 16, 19, 20) selon l'une des revendications précédentes, **caractérisé en ce qu'**au moins un dispositif de capteur (6) du système de capteurs est conçu de telle sorte qu'il émet un signal ou interrompt l'émission d'un signal à la suite d'un enlèvement local de matière de celui-ci et/ou d'un endommagement de celui-ci, et/ou **en ce qu'**au moins un dispositif de capteur du système de capteurs est formé par un conducteur, en particulier une boucle de conducteur (6), ou comprend un tel conducteur, le conducteur (6) étant réalisé en particulier en forme de U avec deux branches allongées (10) et une section coudée (11) reliant les deux branches allongées (10), et la section coudée (11) étant de préférence disposée dans une zone d'extrémité d'une cavité (7) formée dans le composant (1, 13, 16, 19, 20).

5. Composant (1, 13, 16, 19, 20) selon l'une des revendications précédentes, **caractérisé en ce que** le composant (1, 13, 16, 19, 20) comprend une zone de contact (18) destinée à entrer en contact avec le sol et/ou le matériau récolté et/ou fauché lors du fonctionnement d'une machine agricole équipée du composant (1, 13, 16, 19, 20), et en particulier au moins un dispositif de capteur (6) du système de capteurs s'étend dans la zone de contact (18) du composant (1, 13, 16, 19, 20), et/ou **en ce que** le composant (1, 13, 16, 19, 20) présente un bord de contact avant (5) ou un côté de contact qui est destiné à entrer en contact avec le sol et/ou le matériau récolté et/ou fauché pendant le fonctionnement d'une machine agricole équipée du composant (1, 13, 16, 19, 20), et en particulier au moins un dispositif de capteur (6) du système de capteurs s'étend jusqu'au bord de contact avant (5) ou au côté de contact ou jusqu'à un point qui est à une distance maximale de 5 cm, de préférence à une distance maximale de 3 cm, du bord de contact avant (5) ou du côté de contact.

6. Composant (1, 13, 16, 19, 20) selon l'une des revendications précédentes, **caractérisé en ce qu'au** moins une cavité (7) formée dans le composant (1, 13, 16, 19, 20), dans laquelle est disposé au moins un dispositif de capteur (6) du système de capteurs, est ouverte d'un côté, en particulier est formée par un canal (7), de préférence allongé, s'étendant d'un point de la surface du composant à l'intérieur du composant et se terminant à l'intérieur du composant, ou est formée par un trou borgne.

7. Composant (1, 13, 16, 19, 20) selon la revendication 6, **caractérisé en ce qu'**au moins un dispositif de capteur (6) du système de capteurs, en particulier pour le raccordement à une machine agricole devant être équipée du composant (1, 13, 16, 19, 20), comprend au moins un raccord (12) qui fait saillie hors d'une extrémité ouverte (8) de la cavité (7) dans laquelle est disposé le dispositif de capteur (6) du système de capteurs.

8. Composant (1, 13, 16, 19, 20) selon l'une des revendications précédentes, **caractérisé en ce qu'**au moins une cavité (7) dans laquelle est disposé au moins un dispositif de capteur (6) du système de capteurs présente une section transversale au moins sensiblement ronde, de préférence au moins sensiblement cylindrique, et/ou **en ce qu'**au moins une cavité (7) dans laquelle est disposé au moins un dispositif de capteur (6) du système de capteurs présente une longueur qui dépasse le diamètre de la cavité (7) d'un multiple, en particulier d'au moins un facteur cinq, de préférence d'au moins un facteur dix, et/ou **en ce qu'**au moins une cavité (7), dans laquelle est disposé au moins un dispositif de capteur (6) du système de capteurs, est introduite dans le composant (1, 13, 16, 19, 20) par la mise en oeuvre d'un procédé d'enlèvement de matière, en particulier par perçage avec un outil de perçage et/ou un rayon laser, et/ou par un procédé chimique, en particulier par gravure.

9. Composant (1, 13, 16, 19, 20) selon l'une des revendications précédentes, **caractérisé en ce que** le composant (1, 13, 16, 19, 20) avec la au moins une cavité (7) est fabriqué par un procédé de moulage primaire, en particulier par coulée, de préférence au moins un dispositif de capteur (6) du système de capteur étant coulé dans le composant (1, 13, 16, 19, 20), ou **en ce que** le composant (1, 13, 16, 19, 20) avec la au moins une cavité (7) est fabriqué par un procédé de génération, en particulier l'impression 3D, ou **en ce que** le composant (1, 13, 16, 19, 20) avec la au moins une cavité (7) est fabriqué par un procédé de formage, en particulier le forgeage.

10. Composant (1, 13, 16, 19, 20) selon l'une des revendications précédentes, **caractérisé en ce qu'**il est prévu sur le composant (1, 13, 16, 19, 20) au moins un module d'émission pour la transmission sans fil de signaux, qui est relié à au moins un dispositif de capteur (6) du système de capteurs, et/ou **en ce qu'**il est prévu sur le composant (1, 13, 16, 19, 20) au moins un élément de raccordement électrique, en particulier au moins une fiche et/ou au moins une prise.

11. Composant (1, 13, 16, 19, 20) selon l'une des revendications précédentes, **caractérisé en ce que** le composant (1, 13, 16, 19, 20) est conçu comme un soc ou une pointe de soc ou un cultivateur ou des dents ou un ciseau de fraisage ou un releveur, notamment un releveur d'épis, ou un disque, en particulier pour le travail du sol ou le semis, ou un tranchant, en particulier pour une faucheuse ou un hachoir, ou un patin ou une plaque de glissement, en particulier un versoir pour une charrue ou une plaque de guidage pour un cultivateur.

12. Machine agricole, en particulier machine de travail du sol et/ou des prairies, de préférence charrue ou cultivateur ou herse ou motoculteur ou moissonneuse-batteuse ou faucheuse ou broyeur ou machine de récolte ou de fertilisation ou de semis, comprenant au moins un composant (1, 13, 16, 19, 20) selon l'une des revendications précédentes.

13. Machine agricole selon la revendication 12, **caractérisée en ce que** la machine agricole comprend au moins un support de composants sur lequel est fixé au moins un composant (1, 13, 16, 19, 20) selon l'une des revendications 1 à 11, et le support de composants comprend de préférence au moins un raccord électrique qui est conçu pour correspondre à un raccord électrique prévu sur le au moins un composant (1, 13, 16, 19, 20) et qui peut être connecté ou relié à celui-ci.

14. Machine agricole selon la revendication 12 ou 13, **caractérisée en ce que** la machine agricole présente un dispositif de commande qui est relié à au moins un dispositif de capteur (6) du système de capteurs sans câble ou avec un câble et qui est conçu pour recevoir des signaux de l'au moins un dispositif de capteur (6), le dispositif de commande étant de préférence conçu et réglé pour délivrer au moins un message à un utilisateur de la machine agricole en réponse à la réception d'un signal d'un dispositif de capteur (6) du système de capteurs.

15. Procédé d'exploitation d'une machine agricole selon l'une quelconque des revendications 13 à 15, dans lequel, avant et/ou pendant et/ou après un travail du sol et/ou des prairies avec la machine agricole, on contrôle si au moins un dispositif de capteur (6) du système de capteur d'au moins un composant (1, 13, 16, 19, 20) selon l'une quelconque des revendications 1 à 12 émet un signal ou interrompt l'émission d'un signal et, en réponse à cela, on répare ou remplace de préférence au moins un composant (1, 13, 16, 19, 20) de la machine agricole.
